# EUROPÄISCHE PATENTSCHRIFT

(11) **EP 2 134 582 B1**
(45) Veröffentlichungstag und Bekanntmachung des Hinweises auf die Patenterteilung: **11.05.2016**
(21) Anmeldenummer: 08718028.7
(22) Anmeldetag: 19.03.2008
(51) Int. Cl.: B60W 20/00, B60W 30/18, B60K 6/26, B60W 10/08, B60W 10/26

(54) **VERFAHREN ZU FAHRERWUNSCHABHÄNGIGEM BETRIEB EINER ZUM ANTRIEB EINES FAHRZEUGS VORGESEHENEN ELEKTRISCHEN MASCHINE**
METHOD FOR THE DRIVER-SELECTED OPERATION OF AN ELECTRIC MACHINE PROVIDED FOR DRIVING A VEHICLE
PROCEDE D'UTILISATION D'UN MOTEUR ELECTRIQUE PREVU POUR L'ENTRAINEMENT D'UN VEHICULE, EN FONCTION DU CHOIX DU CONDUCTEUR

(30) Priorität: 05.04.2007 DE 102007016449
(43) Veröffentlichungstag der Anmeldung: 23.12.2009
(73) Patentinhaber: Robert Bosch GmbH, 70442 Stuttgart (DE)
(72) Erfinder: SCHENK, Rene, 71732 Tamm (DE); KAEFER, Oliver, 71711 Murr (DE); JUENEMANN, Thorsten, 71069 Sindelfingen (DE)
(86) Internationale Anmeldenummer: PCT/EP2008/053307
(87) Internationale Veröffentlichungsnummer: WO 2008/122494

(56) Entgegenhaltungen:
- EP-A- 1 531 074
- DE-A1- 19 718 378
- US-A- 5 823 280
- US-A- 6 122 588

## Beschreibung

### Stand der Technik

Die Erfindung geht aus von einem Hybridfahrzeug, in dem ein Elektromotor sowie ein Verbrennungsmotor zum Antrieb verwendet werden. Bei Parallelhybridantrieben, in denen die mechanische Leistung des Verbrennungsmotors und/oder die mechanische Leistung der elektrischen Maschine zum Antrieb verwendet wird, wird in bestimmten Betriebsphasen der Verbrennungsmotor ausgeschaltet und vom Antriebsstrang abgekoppelt, um Leistungsverluste durch Mitdrehen des Motors zu verhindern.

In dieser Betriebsphase wird der Elektromotor ausschließlich über die Batterie betrieben. Soll die Geschwindigkeit verringert werden, so wird die kinetische Energie des Fahrzeugs über die elektrische Maschine in elektrische Energie umgewandelt und in dem Akkumulator gespeichert, siehe z.B. die DE-A-19718378. Die Betriebsphase, in der das Auto abgebremst wird, um elektrische Energie zu erzeugen, wird als Rekuperation bezeichnet, wobei die Betriebsphase, in der die elektrische Maschine weder mechanische Energie aufnimmt noch abgibt, als Segelbetrieb bezeichnet wird. Während des Segelbetriebs wird das Auto möglichst wenig gebremst, und es wird kein Schleppmoment erzeugt, das ansonsten zur Verringerung der Geschwindigkeit des Fahrzeugs verwendet wird.

Während des Segelbetriebs, der ein freies Rollen des Fahrzeugs ohne Eingriff des Antriebsaggregats beschreibt, wird das Fahrzeug besonders energiesparend betrieben.

### Offenbarung der Erfindung

Die Erfindung ermöglicht das Vorsehen eines Fahrverhaltens, das der Fahrer von verbrennungsmotorgetriebenen Fahrzeugen kennt, bei einem minimalen Kraftstoffverbrauch. Dadurch ist keine Umgewöhnung auf ein neues Fahrverhalten notwendig, wenn ein Fahrer von einem verbrennungsmotorgetriebenen Fahrzeug auf ein Fahrzeug umsteigt, welches einen Antriebsstrang mit einer elektrischen Maschine hat, beispielsweise ein Hybridfahrzeug. Das erfindungsgemäße Verfahren ist für Fahrzeuge geeignet, die ausschließlich einen Elektromotor als Antrieb aufweisen sowie für Fahrzeuge, die einen Verbrennungsmotor und eine damit verbundene elektrische Maschine aufweisen. Das Verfahren ist insbesondere für Hybridantriebe einsetzbar, d. h. Parallelhybridantriebe mit Verbrennungsmotoren, die ihre Rotationsleistung ohne Energieumwandlung dem Antrieb bereitstellen sowie für Seriell-Hybridantriebe, bei denen die Rotationsleistung in elektrische Leistung umgewandelt und einer elektrischen Maschine zugeführt wird. Insbesondere kann durch das erfindungsgemäße Verfahren der Fahrerwunsch und das gewünschte Fahrverhalten des Fahrzeugs berücksichtigt werden, ohne dass der Fahrer häufig oder ständig Vorgaben hinsichtlich der Beschleunigung und der Geschwindigkeit abgeben muss. Gleichzeitig wird, soweit dies der Fahrerwunsch zulässt, der Antrieb mit einem höchstmöglichen Wirkungsgrad betrieben, so dass eine Energie sparende Fahrweise gegenüber dem Fahrwunsch abgewogen wird.

Erfindungsgemäß umfasst das Verfahren eine Geschwindigkeitsregelung, die sich auf einen Bremsmoment-Schwellwert bezieht. Befindet sich daher das Fahrzeug auf einer abfallenden Strecke, so wäre vor dem Hintergrund einer Energie sparenden Fahrweise ein Segelbetrieb ratsam, in dem das Fahrzeug stetig an Geschwindigkeit zunimmt. Dies ist jedoch der Fahrer nicht gewohnt, so dass der Fahrer für eine konstante Geschwindigkeit, wie sie sich bei einem verbrennungsmotorgetriebenen Fahrzeug mit eingelegtem Gang ergeben würde, ständig aktiv in die Geschwindigkeitsregelung eingreifen muss und es zu kontinuierlich wiederholenden Bremsvorgängen kommt. Diese Bremsvorgänge, die vom Fahrer eingeleitet werden, sind üblicherweise kurz mit einer hohen Verzögerung, die gleichzeitig, auf Grund der Rückgewinnung als elektrische Energie, für den Akkumulator zu kurzen Impulsen mit sehr hohen Strömen führen. Die dadurch verringerte Lebensdauer des Akkumulators wird durch die Regelung des Fahrzeugs vermieden, die für bestimmte Bremsmomentintervalle mit geringen Bremsmomenten eine konstante Geschwindigkeit vorsieht.

Jedoch ist der Fahrer gleichzeitig gewohnt, dass sich das Fahrzeug bei zunehmendem Gefälle weiter beschleunigt, so dass erfindungsgemäß bei einem Ist-Bremsmoment größer als ein Bremsmoment-Schwellwert eine höhere Geschwindigkeit eingeregelt wird.

Vorzugsweise ist diese höhere Geschwindigkeit, welche durch ein geringeres Bremsmoment ausgelöst wird, für ein bestimmtes Bremsmomentintervall eine konstante, jedoch höher liegende Geschwindigkeit. Da ab einem bestimmten Bremsmoment-Schwellwert eine höhere Geschwindigkeit angestrebt wird, welche mit einem geringeren Bremsmoment einhergeht, um das Auto von einem ersten, geringeren Geschwindigkeitswert auf einen zweiten, höheren Geschwindigkeitswert zu beschleunigen, fällt das Ist-Bremsmoment wieder unter den Schwellwert, wodurch sich ein selbstregelnder, asymptotisch annähernder Regelungskreis ergibt. Vorzugsweise wird der Übergang zwischen dem ersten Geschwindigkeitswert (der der geringeren Geschwindigkeit entspricht) zu dem zweiten Geschwindigkeitswert (der der größeren Geschwindigkeit entspricht) weich gestaltet, beispielsweise durch eine zeitliche Verzögerung, wobei das Überschreiten des Bremsmoment-Schwellwerts erst verzögert zu einer anderen Soll-Geschwindigkeit führt. Alternativ oder in Kombination hierzu kann der zweite Geschwindigkeitswert in monoton steigender Abhängigkeit von der Differenz zwischen Ist-Bremsmoment und Bremsmoment-Schwellwert sein, beispielsweise linear proportional, so dass der zweite Geschwindigkeitswert nur wenig über dem ersten Geschwindigkeitswert liegt, wenn das Ist-Bremsmoment nur minimal größer als der Bremsmoment-Schwellwert ist und bei einer starken Überschreitung des Bremsmoment-Schwellwerts der zweite Wert deutlich über dem ersten Wert liegt. Auf diese Weise wird Gefällen mit verschiedenen Steigungen Rechnung getragen. Vorzugsweise ist die Abhängigkeit zwischen der Differenz zwischen dem zweiten Wert und dem ersten Wert und der Differenz zwischen Ist-Bremsmoment und Bremsmoment-Schwellwert regressiv und/oder asymptotisch zu einem konstanten Geschwindigkeitswert. Vorzugsweise wird der zweite Wert vorgesehen, um bei einem hohen Bremsmoment eine hohe Geschwindigkeit zu erlauben, wobei mit zunehmender Geschwindigkeit der Bremsmoment-Schwellwert verringert wird, um so bei hohen Geschwindigkeiten schon bei geringen Bremsmomenten die Regelung auf einen konstanten ersten Geschwindigkeitswert vorzusehen. Dies entspricht dem gewünschten Fahrverhalten eines Fahrzeugs, das trotz eines konstanten Gefälles bei hohen Geschwindigkeiten zu geringerer relativer Beschleunigung neigt, als bei geringen Geschwindigkeiten.

### Ausführungsformen:

In einer bevorzugten Ausführungsform des erfindungsgemäß vorgeschlagenen Verfahrens wird der zweite Geschwindigkeitswert erhöht, wenn eine oder mehrere Ist-Bremsmomentschwellwerte, die vorzugsweise über dem Bremsmoment-Schwellwert liegen, überschritten werden. Daher wird beim Befahren einer abschüssigen Strecke zunächst die Geschwindigkeit beispielsweise stufenweise auf Werte erhöht, so dass bei hohem Ist-Bremsmoment, d. h. bei starker Neigung der Strecke, auch eine höhere Geschwindigkeit erreicht wird und gleichzeitig die Geschwindigkeitszunahme trotz erhöhter Steigung verringert wird, um bei starken Streckenneigungen bzw. hohen Geschwindigkeiten der unbegrenzten Geschwindigkeitszunahme entgegenzutreten. Hierzu können beispielsweise die Ist-Bremsmomentschwellwerte, die nahe bei dem Bremsmoment-Schwellwert liegen und somit einem niedrigen Bremsmoment entsprechen, nahe beieinander liegen, so dass sich bei niedrigen Bremsmomenten eine häufige, gestufte Geschwindigkeitszunahme ergibt. Alternativ oder in Kombination hierzu kann bei geringen Ist-Bremsmomentschwellwerte die Geschwindigkeit um große Werte erhöht werden. Mit zunehmendem Ist-Bremsmoment und/oder mit zunehmender Geschwindigkeit vergrößert sich der Abstand zwischen zwei benachbarten Ist-Bremsmomentschwellen bzw. verringert sich die Zunahme des zweiten Werts bei der Überschreitung dieser Ist-Bremsmomentschwellen. Dadurch kann eine diskrete Regelung in Form einer Werttabelle bzw. Intervalltabelle vorgesehen werden, die einen degressiven Charakter hat und somit die Geschwindigkeitszunahme in ihrem Wert sowie in ihrer Häufigkeit, bezogen auf stetig und/oder linear zunehmende Steigung, verringert.

Wird ein Ist-Bremsmomentschwellwert überschritten bzw. der Bremsmoment-Schwellwert überschritten, so wird vorzugsweise die Geschwindigkeit auf einen höheren zweiten Wert geregelt, indem das eingestellte Ist-Bremsmoment verringert wird, jedoch unterhalb des Bremsmoment-Schwellwerts. Dadurch wird vermieden, dass der Ziel-Geschwindigkeitswert zwischen dem ersten Wert und dem zweiten Wert pendelt, beispielsweise wenn das Einstellen des zweiten Werts zu einem kleinen Bremsmoment führt, das nicht über dem Bremsmoment-Schwellwert liegt, wodurch wiederum der erste Geschwindigkeitswert, der möglicherweise entfernt von dem zweiten Wert liegt, angesteuert wird. Die Änderung der Zielansteuerung vom zweiten Wert auf einen niedrigeren ersten Wert kann wiederum eine höhere Bremswirkung zur Folge haben, so dass das Ist-Bremsmoment über dem Bremsmoment-Schwellwert liegt und somit wieder der höhere zweite Wert angesteuert wird, wodurch sich dieser Pendelprozess ständig wiederholt. Statt oder in Kombination mit der Regelung des Ist-Bremsmoments über dem Bremsmoment-Schwellwert können bei geringen Überschreitungen des Bremsmoment-Schwellwerts der erste Wert dem zweiten Wert oder umgekehrt angenähert werden, und/oder es können zeitliche Verzögerungen in die Regelung eingeführt werden, so dass das Überschreiten bzw. Unterschreiten des Bremsmoment-Schwellwerts nicht unmittelbar zu einer neuen Geschwindigkeitszielvorgabe führt, die sich wesentlich von der vorherigen Geschwindigkeitszielvorgabe unterscheidet. Alternativ oder in Kombination hierzu kann eine stetige, beispielsweise lineare Änderung innerhalb eines Zeitintervalls zur Umstellung der Zielvorgaben verwendet werden.

In einer weiteren Ausführung des erfindungsgemäßen Verfahrens wird eine Geschwindigkeitsobergrenze vorgesehen, die durch Erhöhung des Ist-Bremsmoments beim Annähern der Geschwindigkeitsobergrenze eingehalten wird. Um jedoch ein abruptes Ansteigen des Bremsmoments bei Annäherung an die Geschwindigkeitsobergrenze zu vermeiden, wird vorzugsweise zudem ein maximales Ist-Bremsmoment vorgesehen, das auch bei Annäherung an die Geschwindigkeitsobergrenze nicht überschritten wird. Die Geschwindigkeitsobergrenze kann veränderlich sein, beispielsweise abhängig von der Betätigungsstärke oder Betätigungsdauer eines Fahrpedals, einer Verringerung des Drucks auf ein Bremspedal und/oder auf Grund der Häufigkeit der Betätigung des Fahrpedals.

Gemäß einer weiteren Ausführung entspricht der zweite Geschwindigkeitswert der Geschwindigkeit, die beim Übertreten des Bremsmoment-Schwellwerts vorliegt. Mit zunehmendem Bremsmoment oder abhängig von der Betätigung eines Gaspedals kann der zweite Wert dann kontinuierlich oder in diskreten Schritten erhöht werden, um den Fahrgegebenheiten und dem Fahrerwunsch Rechnung zu tragen. Durch diese Maßnahme wird erreicht, dass beim Übertreten des Bremsmoment-Schwellwerts keine plötzliche Beschleunigung durch einen Sprung in der Soll-Geschwindigkeit auftritt. Vielmehr ist der Eintritt in einen Betriebsbereich, in dem das Ist-Bremsmoment gleich oder größer als der Bremsmoment-Schwellwert liegt, nicht durch einen Geschwindigkeitssprung gekennzeichnet, sondern durch eine geringe, beispielsweise konstante oder kontinuierlich steigende Verringerung des Bremsmoments. Diese Maßnahme verhindert gleichzeitig Pendelvorgänge durch sich periodisch abwechselnde Geschwindigkeitszielvorgaben, d. h. zwischen dem konstanten ersten Wert und einem erfassbar darüber liegenden zweiten Wert. Gleichzeitig erlaubt die Miteinbeziehung der Benutzereingabe die Möglichkeit, dass der Benutzer die Geschwindigkeitszunahme bei starkem Gefälle und vorausgesetzt zum Bremsmoment oberhalb des Bremsmoment-Schwellwerts verringert oder auf Null setzt. Dadurch können zunächst gewollte Beschleunigungsvorgänge bei gewünschten starken Gefällen gemäß der Benutzereingabe gestoppt werden. Vorzugsweise ist vor der Benutzereingabe der zweite Wert ein ständig steigender Geschwindigkeitswert, beispielsweise gemäß einem maximalen Bremsmoment, der zur steten Beschleunigung führt, und nach Benutzereingabe ein konstanter Geschwindigkeitswert, wobei das Bremsmoment derart geregelt wird, dass sich die entsprechenden Geschwindigkeiten einstellen. Während eine Betriebsweise vorsieht, bei einem Ist-Bremsmoment, das gleich oder größer als der Bremsmoment-Schwellwert ist, die Geschwindigkeit kontinuierlich steigen zu lassen, beispielsweise bis zum Zeitpunkt einer Benutzereingabe, kann alternativ oder in Kombination hierzu ein Bremsmoment-Maximalwert festgelegt werden, bei dessen Überschreiten das Bremsmoment derart geregelt wird, dass die Geschwindigkeit einen maximalen Wert nicht überschreitet, vorzugsweise durch Regeln auf eine maximale Geschwindigkeit. Dadurch wird bei besonders starkem Gefälle jede weitere Beschleunigung über eine Maximalgeschwindigkeit vermieden.

Die Maximalgeschwindigkeit kann beispielsweise durch eine Fahrpedalbetätigung, beispielsweise auf Grund deren Stärke, Dauer und/oder Geschwindigkeit erhöht werden. Gleichermaßen kann vorgesehen werden, dass die Betätigung eines Bremspedals, auch beispielsweise die zugehörige Stärke, Dauer, Häufigkeit... zu einer Verringerung der maximalen Geschwindigkeit führt. Vorzugsweise wir die Regelung derart vorgesehen, dass Ist-Bremsmomente vorgesehen werden können, die die Regelung auf die maximale Geschwindigkeit erlauben. Eventuelle Einschränkungen des Ist-Bremsmoments können beim Erreichen der maximalen Geschwindigkeit aufgeweicht (durch Erhöhung eines einzuhaltenden Maximalbremsmoments) oder unterdrückt werden.

Die maximale Geschwindigkeit kann vorgegeben sein, beispielsweise um eine Drosselung des Antriebsaggregats bzw. des Fahrzeugs auf eine Maximalgeschwindigkeit zu erreichen oder kann die Geschwindigkeit sein, die bei einer wiederholten Betätigung, beispielsweise des Bremspedals, vorliegt. Dadurch wird erreicht, dass das wiederholte Betätigen des Bremspedals, beispielsweise das zweimalige Wiederholen, zur Unterbindung jeglicher Beschleunigung führt, so dass weitere Betätigungen des Bremspedals nicht mehr notwendig sind. Dadurch wird unterbunden, dass unerwünschte ständige Beschleunigung zum aktiven und ständig wiederholten Eingreifen des Fahrers führt.

Prinzipiell können erfindungsgemäß alle einstellbaren Regelgrößen wie erster Geschwindigkeitswert, zweiter Geschwindigkeitswert, Soll-Bremsmoment, Bremsmoment-Schwellwert, Geschwindigkeitsobergrenze, Bremsmoment-Maximalwert, maximale Geschwindigkeit oder eine Soll-Beschleunigung vom Fahrer durch Betätigung von Einstellelementen eingestellt oder geändert werden. Die Einstellelemente umfassen insbesondere ein Fahrpedal und ein Bremspedal, wobei die zunehmende Betätigung des einen Pedals die gleiche Wirkung hat wie die abnehmende Betätigung des anderen Pedals und umgekehrt. Die Betätigung eines Pedals wird erfasst durch die Betätigungsstärke, d. h. Betätigungsdruck und/oder Pedalauslenkung, Betätigungszeitdauer, Betätigungshäufigkeit und/oder eine zeitliche Ableitung dieser Größen und/oder eine zeitliche Kombination dieser Größen. Ferner können Summierungswerte aus den verschiedenen Größen gebildet werden, wobei die verschiedenen Größen unterschiedlich gewichtet werden und somit unterschiedlich zum Summierungswert beitragen können. Zur Einstellung der oben genannten Regelgrößen kann auch die Differenz zu einem Schwellwert bzw. das Überschreiten eines Schwellwerts oder eines Sollwerts berücksichtigt werden.

Ein Beispiel einer solchen Betätigungsgrößenkombination ist die Addition eines Zeitdauerwerts und eines Betätigungsstärkewerts. Ferner können zeitliche Ableitungen oder Integrationen von Größen verwendet werden; beispielsweise entspricht die zeitliche Ableitung der Betätigungsstärke des Bremspedals der Geschwindigkeit, mit der eine Beschleunigungsänderung hervorgerufen werden soll. Beispielsweise wird in dem erfindungsgemäßen Verfahren vorzugsweise die schnelle Verringerung des Drucks auf das Bremspedal als Wunsch gewertet, die Abbremsung zu verringern und/oder das Fahrzeug statt abzubremsen zu beschleunigen bzw. bei einer konstanten Geschwindigkeit zu halten.

Neben den oben genannten Bewertungen der Benutzereingabe kann ferner der Batterieladezustand berücksichtigt werden, wobei bei geringem Ladezustand d. h. hochgradiger Entladung mit einer geringen Menge an gespeicherter Energie die oben genannten Regelgrößen derart engestellt werden, dass das Fahrzeug verstärkt abgebremst wird, wodurch durch Rekuperation der Akkumulator wieder aufgeladen werden kann. Beispielsweise wird der zweite Geschwindigkeitswert bei abschüssiger Fahrt verringert, wenn der Batterieladezustand einen höheren Ladestrom erfordert. Wenn der verringerte zweite Geschwindigkeitswert bei erhöhtem Bremsmoment (d. h. bei erhöhtem Ladestrom) innerhalb eines Toleranzbereichs des Fahrers liegt, kann so die Fahreffizienz auf Kosten einer verringerten, vom Fahrer noch tolerierten Fahrqualität erreicht werden. Bei hoher Toleranz des Fahrers kann die Regelung mehr Rücksicht auf einen optimalen Betrieb der Komponenten legen, wobei beispielsweise in kritischen Verkehrssituationen der Fahrer diese Toleranz stark einschränken kann und die Regelung eine im stärkeren Maße ineffiziente Fahrweise vorgibt. Je geringer die Toleranz des Fahrers ist, desto mehr kommen die Eigenschaften des Regelsystems zum Tragen, welche das Fahrverhalten eines verbrennungsmotorgetriebenen Fahrzeugs nachahmen. Bei hoher Toleranz und wenigen bzw. geringen Vorgaben durch den Fahrer wird das Fahrzeug effizienzoptimiert betrieben, beispielsweise durch Verwendung des Segelbetriebs in einem breiten Geschwindigkeitsintervall, wobei der Fahrer bei sich ändernden Steigungen hohe Geschwindigkeitsschwankungen hinnimmt. Das erfindungsgemäße Verfahren kann ferner, soweit es die Fahrertoleranz erlaubt, effizienzoptimiert arbeiten und lediglich einige Grundvorgaben des Fahrers beachten, beispielsweise Minimalgeschwindigkeit, Maximalgeschwindigkeit, minimale Durchschnittsgeschwindigkeit und/oder maximaler streckenbezogener Verbrauch. Vorzugsweise berücksichtigt die erfindungsgemäße Regelung Informationen wie Tankinhalt oder noch zu fahrende Wegstrecke bis zur elektrischen Aufladung des Akkumulators bzw. bis zum Volltanken des Tanks, um so die Effizienzoptimierung optimal mit den Fahrerwünschen abgleichen zu können. Ist beispielsweise für eine noch zurückzulegenden Weg bei gegebener Strecke noch eine bestimmte Kraftstoffmenge im Kraftstofftank, so können Akkumulatorladestand und eine vorzugebende maximale Zeitdauer für den zurückzulegenden Weg vorgegebenen werden und der Fahrer kann darüber informiert werden, wenn ein momentaner Beschleunigungswunsch bzw. Geschwindigkeitswunsch diesen Zielvorgaben widerspricht, beispielsweise durch optische oder akustische Anzeigen oder eine erhöhte Rückstellkraft des Fahrpedals.

Die Benutzereingaben sowie ein Batterieentladezustandswert und/oder ein Schwellwert können allein oder in Kombination miteinander bei der Ermittlung eines konstanten Soll-Bremsmoments berücksichtigt werden, auf das das erfindungsgemäße Verfahren die elektrische Maschine regelt. In einem weiteren Beispiel werden die oben genannten Betätigungswerte und ein Batterieladezustandswert, alleine oder in Kombination miteinander unter Berücksichtigung eines Schwellwerts dazu verwendet werden, um zu ermitteln, ob eine Regelung der Geschwindigkeit auf den zweiten Wert ausgeführt wird, wobei hierzu das Ist-Bremsmoment um einen Verringerungswert verringert wird, der wiederum von einer oben genannten Betätigungsgröße, einem Batterieladezustandswert, einzeln oder in beliebiger Kombination, abhängt.

Gemäß einer weiteren beispielhaften Ausführung der Erfindung umfasst das Regeln der Geschwindigkeit des Fahrzeugs das Regeln auf ein Soll-Bremsmoment, das schrittweise oder kontinuierlich linear mit der Abnahmegeschwindigkeit der Fahrpedalbetätigungsstärke erhöht wird. Dadurch wird der Wunsch nach geringerer Beschleunigung durch ein sich erhöhendes Soll-Bremsmoment wiedergegeben, welches durch das erfindungsgemäße Verfahren eingestellt wird.

Das der Erfindung zu Grunde liegende Konzept wird ferner durch eine Steuerung umgesetzt, die mit dem Fahrzeug zum Datenabtausch verbunden ist, und das das erfindungsgemäße Verfahren ausführt. Die Steuerung kann in Hardware, in Software oder in einer Kombination hiervon ausgeführt werden. Wird die Steuerung durch eine Datenverarbeitungsanlage vorgesehen, die das Verfahren mittels eines gespeicherten Programms implementiert, so wird das der Erfindung zu Grunde liegende Konzept durch das Programm innerhalb des Speichermediums sowie durch ein Speichermedium realisiert, das das Programm für die Steuerung lesbar speichert.

Die Betätigungsstärke, Betätigungshäufigkeit oder Betätigungsdauer des Bremspedals führt gemäß einer vorteilhaften Ausführung der Erfindung zu einem Mindestbremsmoment, das auch ohne Bremsbetätigung erhalten bleibt. Wird wiederum das Fahrpedal betätigt, so kann das Mindestbremsmoment verringert bzw. wieder auf Null gesetzt werden. Hierbei kann die Dauer, die Stärke oder die Häufigkeit der Fahrpedalbetätigung oder eine Kombination hiervon bei der Verringerung bzw. Rücknahme des Mindestbremsmoments berücksichtigt werden. Ferner wird eine schnelle Abnahme der Betätigungsstärke des Fahrpedals als Abbremswunsch interpretiert, so dass in einer beispielhaften Ausführung des Verfahrens die zeitliche Ableitung der Betätigungsstärke des Fahrpedals, die unterhalb eines negativen Schwellwerts liegt, zu einer Verringerung der Sollgeschwindigkeit bzw. Erhöhung des Bremsmoments, beispielsweise in mehrere Stufen, abhängig von der zeitlichen Ableitung führen.

In einer weiteren Ausführung der Erfindung sind verschiedene Datensätze abrufbar, die den Fahrertyp wiedergeben, wobei jeder Fahrertyp mit einem bestimmten Bremsmoment-Schwellwert, einem Bremsmoment-Maximalwert und/oder mit einer maximalen Geschwindigkeit verknüpft ist. Der Fahrertyp kann vorzugsweise durch Bedienung einer Eingabevorrichtung eingestellt werden. Alternativ oder in Kombination hierzu erfasst das erfindungsgemäße Verfahren die Benutzereingaben sowie die resultierenden Beschleunigungen, Geschwindigkeiten sowie deren Dauer und Verlauf, um daraus einen Fahrertyp automatisch zu erkennen, der wiederum mit den oben genannten Einstellwerten verknüpft ist. Wenn beispielsweise Geschwindigkeit und/oder Beschleunigung in weiten Bereichen schnell verändert werden, und/oder tritt über längere Zeit eine hohe Maximalgeschwindigkeit auf, so wird der Bremsmoment-Schwellwert verringert bzw. auf einen niedrigeren Wert eingestellt, die Geschwindigkeitsobergrenze auf einen hohen Wert gesetzt und/oder der Bremsmoment-Maximalwert sowie weitere einstellbare Werte hoch eingestellt bzw. derart eingestellt, dass der Betrieb des Fahrzeugs sich in hohem Maße nach den Fahrerwünschen, die durch die Betätigungen dargestellt werden, richtet, und nur bei längeren Betätigungspausen die Werte nur in einem geringen Maße zu einer optimalen Effizienz hin verschoben werden. Die Informationen, die sich auf den Fahrertyp beziehen, können mit Informationen kombiniert werden, die sich aus der oben beschriebenen Fahrsituation ergeben.

Das Bremsmoment der elektronischen Maschine wird vorzugsweise eingestellt, indem durch die elektrische Maschine fließende Ströme eingestellt werden, beispielsweise mittels einer Leistungsendstufe, die die Erregung eines Gleichstrommotors, der die elektrische Maschine bildet, vorsieht. Alternativ kann ein Synchronmotor zum Antrieb verwendet werden, dessen Frequenz, Phasenlage und/oder Spannung bzw. Strom verändert wird. Hierzu wird die Ständerwicklung geeignet angesteuert. Die Leistungsendstufe wird vorzugsweise von einer Steuerung gesteuert, die Eingaben wie Fahrpedalstellung, Bremspedalstellung, Ladezustand der Batterie, Ladestrom, Geschwindigkeit, Drehzahl, Motortemperatur und/oder Batterietemperatur erfasst und somit den Erregerstrom und/oder den Ständerstrom der elektrischen Maschine steuert, sei es direkt oder über weitere Leistungsendstufen. Die Steuerung regelt vorzugsweise den Ladestrom, und ist ferner eingerichtet, einen mit der elektrischen Maschine verbindbaren Verbrennungsmotor zu starten, falls der Ladezustand des Akkumulators und/oder die von der elektrischen Maschine angeforderte Leistung einen Schwellenwert überschreiten. Die Steuerung ist ferner vorzugsweise eingerichtet, Anzeigedaten zu liefern, die Information über den Ladezustand der Batterie, das Bremsmoment, die Fahrzeuggeschwindigkeit, das Verhältnis von momentaner Fahreffizienz zu optimaler Fahreffizienz und/oder den Ladestrom umfassen. Ferner ist die Steuerung vorzugsweise eingerichtet, von dem Fahrpedal und dem Bremspedal nicht nur Informationen zu empfangen, sondern auch an diese Signale zu liefern, die die Rückstellkraft der Pedale steuern. Wird so von der Steuerung eine Pedalbetätigung erkannt, die zu einer besonders ineffizienten Fahrweise oder zu einem besonders nachteiligen Akkumulatorladestrom führen würde, so gibt die Steuerung an die Pedale Signale aus, welche die Rückstellkraft des entsprechenden Pedals erhöhen.

Die Rückstellkraft kann somit von dem Verhältnis von der momentanen Fahreffizienz zur optimalen Fahreffizienz abhängen, wobei die Fahreffizienz beispielsweise durch den streckenbezogenen Energieverbrauch definiert wird.

Die Regelungsschritte des erfindungsgemäßen Verfahrens werden vorzugsweise durchgeführt, indem Sollwerte mit Istwerten verglichen werden, wobei der daraus resultierende Fehlerwert eine Steuergröße derart beeinflusst, dass der Fehler verringert wird. Die Steuerung kann somit einen P-Regler oder auch einen PI-, einen PD- oder einen PID-Regler umfassen, der die Trägheit der einzelnen Systemkomponenten berücksichtigt und so die Zeitdauer, bis ein Fehler von Null erreicht ist, minimiert. Ferner kann durch entsprechende Einstellungen eines PD-Glieds und/oder eines PI-Glieds ein Überschwingen der Sollgröße verhindert werden.

Das Verfahren kann ferner, neben dem Vorsehen eines Bremsmoments durch die elektrische Maschine auch das Vorsehen eines mitlaufenden, abbremsenden Bremsmoments durch eine Reibbremse und/oder durch die gezielte Ankoppelung eines Verbrennungsmotors umfassen. Falls beispielsweise ein Bremsmoment erforderlich ist, das auf Grund der Nennleistung der elektrischen Maschine oder auf Grund des Nennladestroms des Akkumulators nicht alleine von der elektrischen Maschine aufgebracht werden kann, so sieht das Verfahren vorzugsweise vor, weitere Bremsmomente durch den Verbrennungsmotor und/oder die Reibungsbremse, beispielsweise eine Scheibenbremse, zu erzeugen. Der Verbrennungsmotor kann hierbei ausgeschaltet sein oder mit einem geänderten Zündwinkel laufen, so das dieser mechanische Rotationsenergie, unter Anderem abhängig von der Kupplungsstellung, aufnehmen kann. Die Höhe des Bremsmoments durch den Verbrennungsmotor kann ferner durch den Füllungsgrad des Verbrennungsmotors oder durch den Ankoppelungsgrad an die elektrische Maschine eingestellt werden. Diese zusätzlichen Bremsmomente können beispielsweise auch freigesetzt werden, wenn das Bremspedal besonders stark betätigt wird, beispielsweise in einer Notfallsituation.

## Patentansprüche

1. Verfahren zum Betrieb einer elektrischen Maschine, die zum Antrieb eines Fahrzeugs mit einer Geschwindigkeit vorgesehen ist, umfassend:
Erzeugen eines Ist-Bremsmoments der elektrischen Maschine durch Betreiben der elektrischen Maschine im Generatorbetrieb; und
Ermitteln der Geschwindigkeit des Fahrzeugs sowie des von der elektrischen Maschine vorgesehenen Ist-Bremsmoments,
**gekennzeichnet durch**
Vorsehen eines Bremsmoment-Schwellwerts;
Regeln der Geschwindigkeit des Fahrzeugs auf einen konstanten ersten Wert, wenn das Ist-Bremsmoment kleiner als der Bremsmoment-Schwellwert ist; und
Regeln der Geschwindigkeit des Fahrzeugs auf einen zweiten Wert, der größer als der erste Wert ist, wenn das Ist-Bremsmoment gleich oder größer als der Bremsmoment-Schwellwert ist.

2. Verfahren nach Anspruch 1, wobei das Regeln der Geschwindigkeit auf den zweiten Wert das Erhöhen des zweiten Werts beim Überschreiten einer von einer oder mehreren Ist-Bremsmoment-Schwellen umfasst.

3. Verfahren nach Anspruch 1, wobei das Regeln der Geschwindigkeit auf den zweiten Wert das kontinuierliche Annähern der Geschwindigkeit bei zunehmendem Ist-Bremsmoment an eine Geschwindigkeits-Obergrenze umfasst.

4. Verfahren nach Anspruch 1, wobei das Regeln der Geschwindigkeit auf den zweiten Wert das Regeln auf eine zum Zeitpunkt einer Benutzereingabe vorliegende Geschwindigkeit umfasst.

5. Verfahren nach Anspruch 1, wobei das Regeln der Geschwindigkeit, wenn das Ist-Bremsmoment größer als ein Bremsmoment-Maximalwert ist, der über dem Bremsmoment-Schwellwert liegt, das Regeln auf eine maximale Geschwindigkeit umfasst.

6. Verfahren nach Anspruch 5, wobei die maximale Geschwindigkeit vorgegeben ist oder einer Geschwindigkeit entspricht, die zu einem Zeitpunkt einer wiederholten Benutzereingabe vorliegt.

7. Verfahren nach Anspruch 1, wobei das Regeln der Geschwindigkeit des Fahrzeugs durch Regeln der elektrischen Maschine auf ein konstantes Soll-Bremsmoment vorgesehen wird, wobei das Regeln auf ein konstantes Soll-Bremsmoment ausgeführt wird, wenn ein Zeitdauerwert, ein Häufigkeitswert, ein Betätigungsstärkewert, ein Wert einer zeitlichen Ableitung der Betätigungsstärke, ein Wert einer zeitlichen Integration der Betätigungsstärke einer Bremspedalbetätigung, ein Abnahmegeschwindigkeitswert einer Fahrpedalbetätigung, ein Batterieentladezustandswert oder eine gerichtete oder ungerichtete Kombination hiervon einen Schwellwert übersteigt.

8. Verfahren nach Anspruch 1, wobei das Regeln der Geschwindigkeit auf den zweiten Wert ausgeführt wird, wenn ein Zeitdauerwert, ein Betätigungsstärkenwert, einen Wert einer zeitlichen Integration einer Betätigungsstärke, ein Wert einer zeitlichen Ableitung einer Betätigungsstärke einer Fahrpedalbetätigung oder ein Batterieladezustandswert einen Schwellwert übersteigt, und das Regeln der Geschwindigkeit auf den zweiten Wert das Verringern des Ist-Bremsmoments um einen vorgegebenen oder von einer Betätigung abhängenden Verringerungswert umfasst.

9. Verfahren nach Anspruch 1, wobei das Regeln der Geschwindigkeit durch Regeln der elektrischen Maschine auf ein Soll-Bremsmoment vorgesehen wird, wobei das Soll-Bremsmoment schrittweise oder linear mit der Abnahmegeschwindigkeit einer Fahrpedalbetätigungsstärke erhöht wird.

10. Steuerung, die mit Datenabgabe- und Dateneingabepunkten eines Fahrzeugs verbindbar und eingerichtet ist, das Verfahren nach einem der vorangehenden Ansprüche auszuführen.

## Claims

1. Method for operating an electric machine which is provided for driving a vehicle at a speed, comprising:
generating an actual braking torque of the electric machine by operating the electric machine in the generator mode; and
determining the speed of the vehicle and of the actual braking torque which is provided by the electric machine,
**characterized by**
providing a braking torque threshold value;
regulating the speed of the vehicle to a constant first value if the actual braking torque is lower than the braking torque threshold value; and
regulating the speed of the vehicle to a second value which is higher than the first value if the actual braking torque is equal to or higher than the braking torque threshold value.

2. Method according to Claim 1, wherein the regulation of the speed to the second value comprises increasing the second value when one of or more braking torque thresholds is exceeded.

3. Method according to Claim 1, wherein the regulation of the speed to the second value comprises continuously approximating the speed to a speed upper limit when the actual braking torque increases.

4. Method according to Claim 1, wherein the regulation of the speed to the second value comprises regulation to a speed which is present at the time of a user input.

5. Method according to Claim 1, wherein the regulation of the speed comprises regulation to a maximum speed if the actual braking torque is higher than a braking torque maximum value which is above the braking torque threshold value.

6. Method according to Claim 5, wherein the maximum speed is predefined or corresponds to a speed which is present at a time of a repeated user input.

7. Method according to Claim 1, wherein the regulation of the speed of the vehicle is provided by regulating the electric machine to a constant setpoint braking torque, wherein the regulation to a constant setpoint braking torque is carried out if a time period value, a frequency value, an activation intensity value, a value of a time derivative of the activation intensity, a value of an integration of the activation intensity of a brake pedal activation over time, a value of the rate of decrease of an accelerator pedal activation, a battery discharge status value or a directional or non-directional combination thereof exceeds a threshold value.

8. Method according to Claim 1, wherein the speed is regulated to the second value if a time period value, an activation intensity value, a value of integration of an activation intensity over time, a value of a time derivative of an activation intensity of an accelerator pedal activation or a battery charge status value exceeds a threshold value, and the regulation of the speed to the second value comprises reducing the actual braking torque by a predefined reduction value or by a reduction value which depends on an activation.

9. Method according to Claim 1, wherein the regulation of the speed is provided by regulating the electric machine to a setpoint braking torque, wherein the setpoint braking torque is increased incrementally or linearly with the rate of decrease of an accelerator pedal activation intensity.

10. Controller which can be connected to data output points and data input points of a vehicle and is configured to carry out the method as claimed in one of the preceding claims.

## Revendications

1. Procédé de mise en fonctionnement d'un moteur électrique permettant d'entraîner un véhicule à une certaine vitesse, consistant à :
générer un moment de freinage réel du moteur électrique par mise en fonctionnement du moteur électrique en mode générateur ; et
déterminer la vitesse du véhicule et le moment de freinage réel produit par le moteur électrique,
**caractérisé par** le fait de
prévoir un seuil de moment de freinage ;
réguler la vitesse du véhicule à une première valeur constante lorsque le moment de freinage réel est inférieur au seuil de moment de freinage ; et
réguler la vitesse du véhicule à une deuxième valeur supérieure à la première valeur lorsque le moment de freinage réel est supérieur ou égal au seuil de moment de freinage.

2. Procédé selon la revendication 1, dans lequel la régulation de la vitesse à la deuxième valeur consiste à augmenter la deuxième valeur lors du dépassement de l'un d'un ou plusieurs seuils de moment de freinage réel.

3. Procédé selon la revendication 1, dans lequel la régulation de la vitesse à la deuxième valeur consiste à faire tendre continument la vitesse vers une limite de vitesse supérieure lorsque le moment de freinage réel raugmente.

4. Procédé selon la revendication 1, dans lequel la régulation de la vitesse à la deuxième valeur consiste à effectuer une régulation à une vitesse observée à l'instant d'une saisie effectuée par un utilisateur.

5. Procédé selon la revendication 1, dans lequel la régulation de la vitesse consiste, lorsque le moment de freinage réel est supérieur à une valeur maximale du moment de freinage qui est supérieure au seuil de moment de freinage, à effectuer la régulation à une vitesse maximale.

6. Procédé selon la revendication 5, dans lequel la la vitesse maximale est prédéterminée ou correspond à une vitesse qui est observée à un instant de répétition de la saisie effectuée par un utilisateur.

7. Procédé selon la revendication 1, dans lequel la régulation de la vitesse du véhicule est effectuée par régulation du moteur électrique à un moment de freinage de consigne constant, dans lequel la régulation à un moment de freinage de consigne constant est effectuée lorsqu'une valeur de durée, une valeur de fréquence, une valeur d'actionnement, une valeur d'une dérivée temporelle de l'intensité d'actionnement, une valeur d'une intégration temporelle de l'intensité d'actionnement de l'actionnement d'une pédale de frein, une valeur de vitesse de diminution de l'actionnement d'une pédale d'accélérateur, une valeur d'état de charge de batterie ou une combinaison orientée ou non orientée de celles-ci dépasse un seuil.

8. Procédé selon la revendication 1, dans lequel la régulation de la vitesse à la deuxième valeur est effectuée lorsqu'une valeur de durée, une valeur d'actionnement, une valeur d'une intégration temporelle d'une intensité d'actionnement, une valeur d'une dérivée temporelle d'une intensité d'actionnement de l'actionnement d'une pédale de frein ou une valeur d'état de charge de batterie dépasse un seuil, et la régulation de la vitesse à la deuxième valeur consiste à réduire le moment de freinage réel d'une valeur de diminution prédéterminée ou dépendant d'un actionnement.

9. Procédé selon la revendication 1, dans lequel la régulation de la vitesse est effectuée par régulation du moteur électrique à un moment de freinage de consigne, dans lequel le moment de freinage de consigne est augmenté pas à pas ou linéairement en fonction de la vitesse de diminution d'un intensité d'actionnement de la pédale d'accélérateur.

10. Unité de commande pouvant être reliée à des points de sortie de données et d'entrée de données d'un véhicule et conçue pour mettre en oeuvre le procédé selon l'une quelconque des revendications précédentes.
